# FASCICULE DE BREVET EUROPEEN

(11) **EP 3 313 190 B1**
(45) Date de publication et mention de la délivrance du brevet: **11.09.2019**
(21) Numéro de dépôt: 16757274.2
(22) Date de dépôt: 27.06.2016
(51) Int. Cl.: A23C 7/04, A23C 9/142, A23C 9/144, A23J 1/20, A23J 3/08

(54) **PROCÉDÉ DE FABRICATION D'UNE COMPOSITION PROTÉIQUE LAITIÈRE DÉMINÉRALISÉE, ADAPTÉ NOTAMMENT À LA FILIÈRE BIOLOGIQUE, ET COMPOSITION PROTÉIQUE LAITIÈRE DÉMINÉRALISÉE**
VERFAHREN ZUR HERSTELLUNG EINER INSBESONDERE FÜR DEN ORGANISCHEN BEREICH GEEIGNETEN DEMINERALISIERTEN MILCHPROTEINZUSAMMENSETZUNG UND DEMINERALISIERTE MILCHPROTEINZUSAMMENSETZUNG
METHOD FOR PRODUCING A DEMINERALISED MILK PROTEIN COMPOSITION, SUITABLE IN PARTICULAR FOR THE ORGANIC SECTOR, AND DEMINERALISED MILK PROTEIN COMPOSITION

(30) Priorité: 25.06.2015 WO PCT/FR2015/000127
(43) Date de publication de la demande: 02.05.2018
(73) Titulaire: Nutribio, 80600 Doullens (FR)
(72) Inventeur: VAN AUDENHAEGE, Marieke, 35700 Rennes (FR); FAIRISE, Jean-Francois, 78540 Vernouillet (FR)
(74) Mandataire: Delaveau, Sophie
(86) Numéro de dépôt international: PCT/FR2016/051582
(87) Numéro de publication internationale: WO 2016/207579

(56) Documents cités:
- EP-A1- 1 031 288
- WO-A2-2013/068653
- FR-A1- 2 809 595
- FR-A1- 3 001 362

## Description

L'invention concerne principalement un procédé de déminéralisation d'une composition protéique laitière.

L'invention porte également sur une composition protéique laitière déminéralisée susceptible d'être obtenue par un tel procédé. EP-A-1 031 288 divulgue une composition laitière minérale. WO-A-2013/068653 divulgue un procédé pour la production d'un produit laitier. FR-A-3 001 362 divulgue un procédé de fractionnement des solubles de pois. FR-A-2 809 595 divulgue un dérivé laitier présentant une composition minérale et en acides aminés sélectivement modifiée.

Parmi les compositions protéiques laitières connues, le lactosérum est la partie liquide issue de la coagulation du lait pendant la fabrication de fromage.

Le lactosérum est principalement formé d'eau, de lactose, de protéines et de minéraux. L'une des voies de valorisation du lactosérum concerne la fabrication de poudre de lactosérum servant d'ingrédient pour la réalisation des laits infantiles. Pour ce faire, il est notamment nécessaire de procéder à une réduction de la teneur en minéraux pour obtenir un produit riche en protéines et en lactose.

De façon connue, le procédé de déminéralisation de lactosérum comprend notamment une étape d'écrémage permettant de diminuer la teneur en matières grasses du lactosérum, suivie d'une étape d'électrodialyse par laquelle est obtenu un lactosérum dialysé contenant 50 à 60% en poids en moins de minéraux. Le lactosérum écrémé et dialysé passe ensuite dans une colonne cationique d'où il ressort fortement appauvri en cations, puis dans une colonne anionique à la sortie de laquelle le lactosérum est dit déminéralisé.

Mais la régénération des résines échangeuses d'ions engendre l'utilisation de bases et d'acides forts tels que la soude, la potasse ou l'acide chlorhydrique qui peuvent être préjudiciables à la qualité du produit déminéralisé obtenu. De par leur fonctionnement, les résines d'échange d'ions induisent l'ajout d'espèces minérales exogènes et sont à ce titre considérées comme des auxiliaires technologiques au sens de la norme européenne CE 889/2008. Leur utilisation dans la filière biologique en est de ce fait interdite.

Dans ce contexte, la présente invention vise un procédé de déminéralisation d'une composition protéique laitière dépourvu de toute opération mettant en oeuvre des résines échangeuses d'ions et permettant d'obtenir un niveau de déminéralisation au moins égal à 90% tout en respectant un profil minéral compatible avec l'élaboration d'un produit tel que le lait infantile.

À cet effet, le procédé de fabrication de la composition protéique laitière déminéralisée est essentiellement caractérisé en ce qu'il comporte au moins les étapes de :
- préparation ou fourniture d'une composition protéique laitière,
- ultrafiltration de la dite composition protéique laitière,
- nanofiltration du rétentat d'ultrafiltration obtenu à l'étape précédente, et
- électrodialyse du rétentat de nanofiltration obtenu à l'étape précédente,
le dit procédé étant dépourvu de toute étape de passage sur des résines échangeuses d'ions.

Ainsi, le procédé de l'invention est exclusivement un procédé membranaire mettant en jeu, dans un ordre spécifique, des étapes d'ultrafiltration, de nanofiltration et d'électrodialyse. Le procédé de l'invention permet d'obtenir une composition protéique laitière déminéralisée à hauteur de 90% dans laquelle la teneur en minéraux est contrôlée en permettant notamment la préservation du rapport entre le calcium et le phosphore aussi proche que possible du lait, ce qui n'est pas le cas pour un procédé de déminéralisation classique avec passage sur des résines échangeuses d'ions qui présente un rapport entre le calcium et le phosphore bien plus bas. La composition protéique laitière présente en outre un taux de dénaturation protéique bien inférieur à celui des compositions obtenues par le procédé de déminéralisation de l'art antérieur mettant en jeu des résines échangeuses d'ions.

Le procédé de l'invention peut également comporter les caractéristiques optionnelles suivantes considérées isolément ou selon toutes les combinaisons techniques possibles :
- le rétentat d'ultrafiltration présente une teneur en matière azotée totale au moins égale à 14% de l'extrait sec.
- selon une première variante, la composition protéique laitière est du sérum de fromagerie.
- le sérum de fromagerie est issu de l'agriculture biologique.
- selon une seconde variante, la composition protéique laitière est issue d'un procédé comprenant au moins les étapes de :
   - fourniture de lait cru,
   - écrémage, traitement thermique et épuration bactérienne dudit lait cru,
   - microfiltration sur membrane du lait obtenu à l'étape précédente, et
   - récupération du perméat de microfiltration formant la composition protéique laitière.
- la membrane de microfiltration présente une porosité comprise entre 0,1 et 0,2 micromètres.
- le lait cru est issu de l'agriculture biologique.

L'invention porte également sur une composition protéique laitière déminéralisée susceptible d'être obtenue par le procédé tel que précédemment décrit.

La composition protéique laitière de l'invention peut également comporter les caractéristiques optionnelles suivantes considérées isolément ou selon toutes les combinaisons techniques possibles :
- dans la composition protéique laitière susceptible d'être obtenue par le procédé tel que précédemment décrit, le rapport entre les teneurs en calcium et en phosphore est supérieur à 0,65.
- dans ce cas, la composition protéique laitière déminéralisée peut comporter :
   - du calcium à une teneur inférieure à 11 milligrammes par gramme de matière azotée totale,
   - du sodium à une teneur inférieure à 5 milligrammes par gramme de matière azotée totale,
   - du magnésium à une teneur inférieure à 3 milligrammes par gramme de matière azotée totale,
   - du potassium à une teneur inférieure à 5,5 milligrammes par gramme de matière azotée totale,
   - des chlorures à une teneur inférieure à 1,7 milligrammes par gramme de matière azotée totale, et
   - du phosphore à une teneur inférieure à 8,5 milligrammes par gramme de matière azotée totale.
- plus précisément, la composition protéique laitière déminéralisée peut comporter :
   - du calcium à une teneur inférieure à 7,7 milligrammes par gramme de matière azotée totale,
   - du sodium à une teneur inférieure à 3,65 milligrammes par gramme de matière azotée totale,
   - du magnésium à une teneur inférieure à 2,15 milligrammes par gramme de matière azotée totale,
   - du potassium à une teneur inférieure à 3,70 milligrammes par gramme de matière azotée totale,
   - des chlorures à une teneur inférieure à 1,5 milligrammes par gramme de matière azotée totale, et
   - du phosphore à une teneur inférieure à 7,7 milligrammes par gramme de matière azotée totale.
- la composition protéique laitière déminéralisée susceptible d'être obtenue par le procédé tel que précédemment décrit présente un pourcentage de protéines natives par rapport aux protéines totales qui est supérieur à 85.
- la composition protéique laitière déminéralisée présente un pourcentage de protéines natives par rapport aux protéines totales qui est supérieur à 90.
- le taux d'agrégation de la protéine A-lactalbumine dans ladite composition est inférieur à 5%.
- le diamètre moyen de type D4,3 des particules de la composition protéique laitière déminéralisée susceptible d'être obtenue par le procédé précédemment décrit est inférieur à 0,3 micromètres.
- le diamètre moyen de type D4,3 des particules de la composition protéique laitière déminéralisée est inférieur à 0,2 micromètres et en ce qu'au moins 40% des particules en volume ont une taille inférieure à 0,15 micromètres.

L'invention porte enfin sur l'utilisation d'une composition protéique déminéralisée telle que précédemment décrite, dans laquelle utilisation cette composition est utilisée comme ingrédient pour l'élaboration d'un lait infantile.

Avantageusement, le lait infantile est issu de l'agriculture biologique.

D'autres caractéristiques et avantages de l'invention ressortiront clairement de la description qui en est donnée ci-dessous, à titre indicatif et nullement limitatif, et en référence aux figures suivantes
- la figure 1 est un schéma synoptique du procédé de fabrication d'une composition protéique laitière déminéralisée selon l'invention et selon deux voies différentes de fourniture ou de fabrication de la composition protéique laitière destinée à subir les étapes de déminéralisation,
- la figure 2 illustre les teneurs en minéraux respectivement obtenues à partir de la composition déminéralisée de l'invention et de la composition de l'art antérieur, ainsi que les maximums réglementaires autorisés pour ces minéraux dans un lait infantile,
- la figure 3 représente le spectre de fluorescence d'une solution pure d'alphalactalbumine soumise aux fluctuations de pH du procédé de l'invention,
- la figure 4 représente le spectre de fluorescence d'une solution pure d'alphalactalbumine soumise aux fluctuations de pH du procédé de l'art antérieur, et
- la figure 5 illustre la répartition de la taille des particules dans la composition de l'invention et dans la composition de l'art antérieur.

Le procédé de l'invention réside essentiellement dans la succession, dans l'ordre, des étapes d'ultrafiltration, de nanofiltration et d'électrodialyse d'une composition protéique laitière. Cette composition protéique laitière pourra, à titre d'exemple, être du sérum de fromagerie ou du lait cru écrémé, thermisé, bactofugé et microfiltré.

Dans la description qui suit, l'emploi de l'expression « art antérieur » se réfère au procédé et à la composition déminéralisée associée obtenue lorsque sont utilisées des résines échangeuses d'ions.

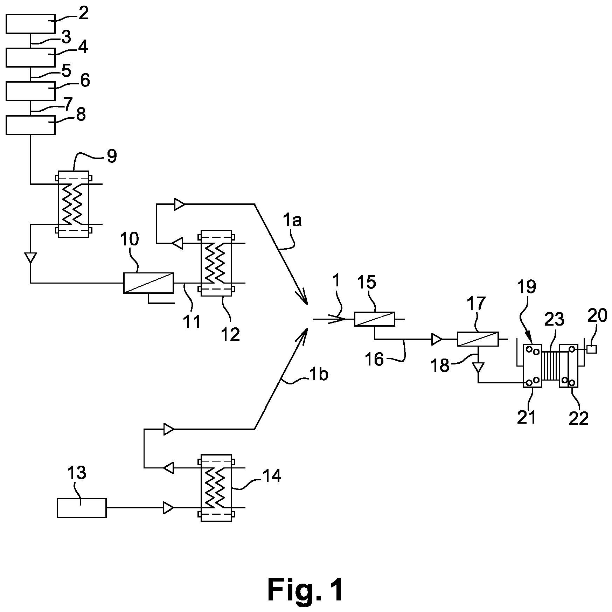

En référence à la figure 1, on décrit en premier lieu l'élaboration de la composition protéique laitière 1 à partir de lait cru 2. Le lait cru 2 est préférentiellement issu de la filière biologique.

Le lait cru 2 subit en premier lieu un écrémage 3 dans des conditions standards avec une température d'écrémage de l'ordre de 50°C, puis le lait écrémé 4 subit ensuite une thermisation 5 à une température de l'ordre de 65°C-68°C pendant moins d'une minute. Ce traitement thermique est volontairement limité à cette étape pour éviter l'agrégation des protéines sériques sur les micelles de caséine et obtenir le meilleur rendement protéique à l'étape ultérieure de microfiltration.

Le lait écrémé et thermisé 6 subit alors une bactofugation mécanique 7 pour assurer son épuration bactérienne et parfaire son écrémage. On peut prévoir alternativement une autre opération d'épuration bactérienne telle que par exemple une microfiltration.

Le lait écrémé, thermisé et bactofugé subit ensuite une étape de chambrage non représentée, à une température de l'ordre de 50-52°C en vue de sa préparation pour l'étape de microfiltration 10.

La composition du lait écrémé, thermisé et bactofugé est donné sur le Tableau 1 ci-dessous. La matière azotée totale englobe principalement les protéines, les peptides et l'azote non protéique, par exemple l'urée. Dans les résultats présentés ci-dessous, la matière azotée totale est quantifiée par dosage de l'azote total par distillation selon la méthode Kjeldahl.

**Tableau 1 : Composition du lait écrémé, thermisé et bactofugé**

| | |
|---|---|
| pH à 20°C | 6,6-6,7 |
| Extrait sec (g/L) | 90 - 96 |
| Matière azotée totale (en % d'extrait sec) | 36 - 39 |
| Fraction azotée non protéique (g/L) | 1,8 - 2,2 |
| Matière grasse résiduelle (g/L) | 0,4 - 1 |
| Cendres (g/L) | <9 |
| Lactose (g/L) | 46 - 50 |

La microfiltration 10 est une microfiltration tangentielle dont la membrane céramique présente une porosité de 0,1 micromètre. Sa température de fonctionnement est comprise entre 49 et 53 °C, de préférence de 52°C. Le perméat 11 subit un refroidissement 12 et est récupéré à une température comprise entre 10 et 15°C, de préférence de 12°C. Le perméat 11 refroidi forme alors une composition protéique laitière 1a issue du lait et destinée à subir les étapes successives ultérieures de concentration et déminéralisation qui seront décrites plus loin.

La composition protéique laitière obtenue 1a présente une teneur en extrait sec de l'ordre de 57 à 62 g/kg, une teneur en matière azotée totale de l'ordre de 9 à 12% de l'extrait sec, et une teneur en matière grasse inférieure à 0,5% de l'extrait sec.

La composition protéique laitière 1 peut alternativement être issue de lactosérum de fromagerie d'origine biologique 13 qui subit un refroidissement 14 pour être récupéré à une température comprise entre 10 et 15°C, de préférence de 12°C, et former une composition protéique laitière 1b.

La composition protéique laitière 1 à déminéraliser peut ainsi être soit une composition protéique laitière 1a issue du lait d'origine biologique, soit une composition protéique laitière 1b issue du lactosérum de fromagerie d'origine biologique. La composition protéique laitière peut bien entendu ne pas être d'origine biologique.

La composition protéique laitière 1 subit alors une succession d'opérations membranaires. L'exemple ci-après se rapporte à la déminéralisation de la composition protéique laitière 1a issue du lait d'origine biologique 2.

En premier lieu, la composition protéique laitière 1a subit une opération d'ultrafiltration 15 de laquelle est récupérée le rétentat 16. Cette opération d'ultrafiltration s'apparente à une pré-concentration et une première déminéralisation de la composition protéique laitière 1. Cette opération d'ultrafiltration 15 est menée de façon que le rétentat 16 présente une teneur en extrait sec supérieure à 60g/kg, une teneur en matière grasse inférieure à 0,5% de l'extrait sec, mais surtout une teneur en matière azotée totale au moins égale à 15% de l'extrait sec. La teneur en nitrates et nitrites est nulle ou quasiment nulle. Cette opération permet par ailleurs d'augmenter la teneur en matière azotée totale et d'éliminer partiellement les cations solubles, ce dont il résulte la diminution du rapport entre les cations divalents et la teneur en matière azotée totale.

Le rétentat d'ultrafiltration 16 subit alors une opération de nanofiltration 17 qui permet de concentrer le rétentat d'ultrafiltration 16 à plus de 19% d'extrait sec et préférentiellement à plus de 21% d'extrait sec. Cette opération permet d'optimiser le fonctionnement de l'étape ultérieure d'électrodialyse en assurant en outre une pré-déminéralisation à hauteur de 30 à 35% en poids de minéraux. Le rétentat de nanofiltration 18 est récupéré, et présente, outre une teneur en extrait sec supérieure à 21%, une teneur en matière azotée totale supérieure à 13,6% de l'extrait sec, et toujours une teneur en matière grasse inférieure à 0,5% de l'extrait sec.

Le rétentat de nanofiltration 18 subit alors une opération d'électrodialyse 19 conduite dans des conditions adaptées pour l'obtention d'une composition protéique laitière déminéralisée 20. Lors de l'électrodialyse, le rétentat de nanofiltration 18 circule dans un compartiment diluât 21. Sous l'effet d'un champ électrique, le rétentat de nanofiltration 18 se déminéralise et les ions passent dans un compartiment concentrât 22 en traversant de manière sélective des membranes anioniques ou cationiques 23. La circulation du rétentat de nanofiltration 18 est effectuée jusqu'à ce que le niveau de déminéralisation soit atteint pour une conductivité comprise entre 0,3 et 0,5 mS/cm, de préférence entre 0,3 et 0,4 mS/cm pour obtenir des performances de déminéralisation encore meilleures.

Le lactosérum déminéralisé 20 présente une teneur en extrait sec de l'ordre de 192 à 194 grammes par kilogramme, en tout état de cause supérieure à 190 grammes par kilogramme, une teneur en matière grasse inférieure à 0,5% de l'extrait sec, une teneur en matière azotée de l'ordre de 15 à 16 % de l'extrait sec, en tout état de cause au moins égale à 14% de l'extrait sec, une teneur en lactose inférieure à 83% de l'extrait sec, et une teneur en cendres inférieure à 1% de l'extrait sec, de préférence inférieure à 0,7% de l'extrait sec. La teneur en nitrates, et nitrites est nulle ou quasi nulle.

Le Tableau 2 ci-dessous met en évidence la synergie des opérations de nanofiltration et d'électrodialyse. À partir d'une composition protéique laitière 1 (colonne 1) obtenue à partir de lait cru d'origine biologique ayant subi le traitement décrit précédemment, et connaissant les pourcentages respectifs de déminéralisation pour la nanofiltration (colonne 2) et pour l'électrodialyse (colonne 4), on calcule les teneurs théoriques d'un lactosérum déminéralisé (colonne 5). Ces teneurs théoriques correspondant à la somme des pourcentages de déminéralisation de la nanofiltration et de l'électrodialyse. Sur la colonne 6, on reporte les teneurs en minéraux effectivement obtenues après passage par la nanofiltration et l'électrodialyse dans le cadre du procédé de l'invention.

**Tableau 2 : Mise en évidence de la synergie des étapes de nanofiltration et d'électrodialyse**

| | Composition protéique laitière (1a) | % de déminéralisation par nanofiltration | % de déminéralisation par électrodialyse | Lactosérum déminéralisé théorique | Lactosérum déminéralisé selon le procédé de l'invention |
|---|---|---|---|---|---|
| calcium (mg/kg d'extrait sec) | 5010 | 2,5 | 37,3 | **3066** | **651** |
| magnésium (mg/kg d'extrait sec) | 1095 | 3,2 | 24,7 | **798** | **208** |
| potassium (mg/kg d'extrait sec) | 24585 | 35,6 | 71,0 | **4593** | **313** |
| sodium (mg/kg d'extrait sec) | 5920 | 36,8 | 54,5 | **1703** | **339** |
| phosphore (mg/kg d'extrait sec) | 5615 | -7,5 | 45,0 | **3321** | **990** |

Le Tableau 3 ci-dessous expose les compositions minérales de lactosérums déminéralisés à hauteur de 90% de l'art antérieur et de l'invention ainsi que leur rapport respectif des teneurs en calcium et phosphore.

**Tableau 3 : Compositions minérales de compositions protéiques laitières déminéralisées de l'art antérieur et de l'invention - comparaison des rapports des teneurs en calcium et phosphore**

| | Art antérieur 1 (mg/100mg) | Art antérieur 2 (mg/100mg) | Invention 1 (mg/g MAT) | Invention 2 (mg/g MAT) | Invention 3 (mg/g MAT) | Invention 4 (mg/g MAT) |
|---|---|---|---|---|---|---|
| Sodium | 7 | 80 | 3,63 | 2,48 | 2,35 | 5 |
| Potassium | 3,5 | 185 | 3,30 | 2,59 | 1,80 | 5,5 |
| Calcium | 15 | 30 | 7,66 | 5,78 | 4,71 | 11 |
| Magnésium | 8 | 16,5 | 2,14 | 1,64 | 1,38 | 3 |
| Phosphore | 85 | 100 | 7,62 | 7,15 | 6,86 | 8,5 |
| Chlorures | 30,5 | 15 | 1,25 | 1,45 | 1,14 | 1,7 |
| Cendres | 0,4% d'ES | 0,9% d'ES | 0,6% d'ES | 0,4 % d'ES | 0,4% d'ES | - |
| Rapport Ca/P | 0,49 | 0,3 | 1,01 | 0,81 | 0,69 | 1,29 |
| Art antérieur 1 : Lactosérum déminéralisé biologique en poudre obtenu par un premier procédé comportant des passages sur résines échangeuses d'ions | | | | | | |
| Art antérieur 2 : Lactosérum déminéralisé en poudre obtenu par un second procédé comportant des passages sur résines échangeuses d'ions | | | | | | |
| Invention 1 : Lactosérum déminéralisé liquide obtenu à partir d'une composition protéique laitière issue du lait d'origine biologique - conductivité en fin d'électrodialyse : 0,5 mS/cm - sans ajustement de pH - résultats exprimés en milligrammes par gramme de Matière Azotée Totale | | | | | | |
| Invention 2 : Lactosérum déminéralisé liquide obtenu à partir d'une composition protéique laitière issue du lait d'origine biologique - conductivité en fin d'électrodialyse : 0,4 mS/cm - sans ajustement de pH - résultats exprimés en milligrammes par gramme de Matière Azotée Totale | | | | | | |
| Invention 3 : Lactosérum déminéralisé liquide obtenu à partir d'une composition protéique laitière issue du lait d'origine biologique - conductivité en fin d'électrodialyse : 0,35 mS/cm - sans ajustement de pH - résultats exprimés en milligrammes par gramme de Matière Azotée Totale | | | | | | |
| Invention 4: Extrapolation des résultats des Inventions 1, 2 et 3 pour une conductivité en fin d'électrodialyse de 0,7 mS/cm - résultats exprimés en milligrammes par gramme de Matière Azotée Totale | | | | | | |

On constate des Tableaux 2 et 3 que le procédé de l'invention permet d'obtenir une composition protéique laitière déminéralisée à hauteur de 90% par une succession de procédés membranaires et ce, sans utiliser de résines échangeuses de cations ni de résines échangeuses d'anions.

On constate par ailleurs au regard du Tableau 2 ci-dessus que les taux de déminéralisation réels obtenus par le procédé de l'invention sont au moins quatre fois supérieurs à ceux théoriquement calculés.

On constate par ailleurs que le lactosérum déminéralisé de l'invention présente avantageusement une teneur en phosphore basse et une teneur en calcium suffisamment contrôlée pour que le rapport des teneurs en calcium et en phosphore soit compris entre 0,65 et 1,29. Ce rapport se rapproche de celui du lait, qui est environ de 1,25 et ce, contrairement aux lactosérums déminéralisés des deux procédés de l'art antérieur qui présentent des rapports respectifs du calcium sur le phosphore de 0,49 et 0,3.

L'obtention d'un rapport plus élevé des teneurs en calcium et phosphore permet avantageusement de limiter la quantité de minéraux à ajouter lors de l'élaboration ultérieure du lait infantile.

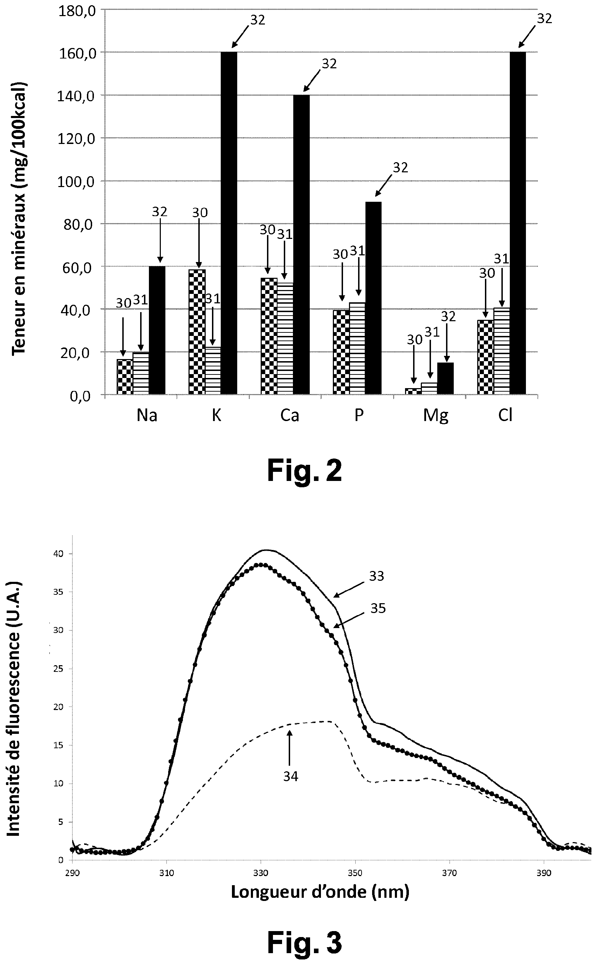

La figure 2 illustre la teneur en certains minéraux (sodium, potassium, calcium, phosphore, magnésium et chlorures) exprimée en poids par 100kcal dans un mélange fait d'une composition protéique laitière déminéralisée et de lait, avant toute supplémentation en minéraux, en vue de l'élaboration d'un lait infantile premier âge. Les résultats référencés 30 concernent le cas où la composition protéique laitière déminéralisée est celle de l'invention, et les résultats référencés 31 concernent le cas où la composition protéique laitière déminéralisée est celle de l'art antérieur. Sont également représentés sur cette figure les maximums réglementaires autorisés pour ces minéraux (référencement 32) dans un lait infantile premier âge. On constate que la composition protéique laitière déminéralisée de l'invention, lorsque mélangée à du lait en vue de la réalisation d'un lait infantile, par exemple un lait premier âge, présente un profil en minéraux bien inférieur aux maximums règlementaires autorisés. Ces résultats illustrent également la grande latence possible pour rajouter certains minéraux selon le type de lait infantile visé et ce, sans dépasser les maximums autorisés.

Le procédé de l'invention décrit dans cet exemple de réalisation s'applique à la déminéralisation de toute composition protéique laitière.

Le procédé de l'invention permet de réaliser une nouvelle ligne de production d'une composition protéique laitière déminéralisée à hauteur de 90% avec un profil minéral spécifique et compatible avec la formulation de lait infantile et ce, uniquement par des procédés membranaires de filtration et de déminéralisation. La composition protéique laitière déminéralisée obtenue respecte ainsi les spécifications ioniques spécifiques, notamment pour servir d'ingrédient à la fabrication de lait infantile. Le procédé de l'invention ne nécessite pas d'ajout d'auxiliaire technologique qui modifie la composition intrinsèque du produit. L'absence de résines échangeuses d'ions permet à la composition protéique laitière déminéralisée obtenue de satisfaire aux conditions décrites dans le règlement européen CE 889/2008 régissant la fabrication des produits transformés d'origine biologique, à la seule condition que le lait cru ou le sérum de fromagerie utilisés pour fabriquer la composition protéique laitière soient issus de l'agriculture biologique.

La Demanderesse a eu la surprise de constater que le procédé de l'invention engendrait des conséquences avantageuses sur la composition protéique laitière déminéralisée obtenue allant au-delà de l'objectif premier de réaliser une composition laitière déminéralisée sans utiliser de résines échangeuses d'ions.

Il a en effet été constaté en premier lieu que le taux de protéines natives dans la composition protéique laitière déminéralisée de l'invention est nettement supérieur au taux de protéines natives présents dans la composition déminéralisée de l'art antérieur. Ou autrement dit, le taux de dénaturation des protéines dans la composition protéique laitière déminéralisée de l'invention est bien inférieur au taux de dénaturation des protéines dans la composition déminéralisée de l'art antérieur.

Ce faible taux de dénaturation est directement lié au procédé de l'invention qui n'implique ni variation importante de pH, ni traitement thermique substantiel comme il est démontré ci-après.

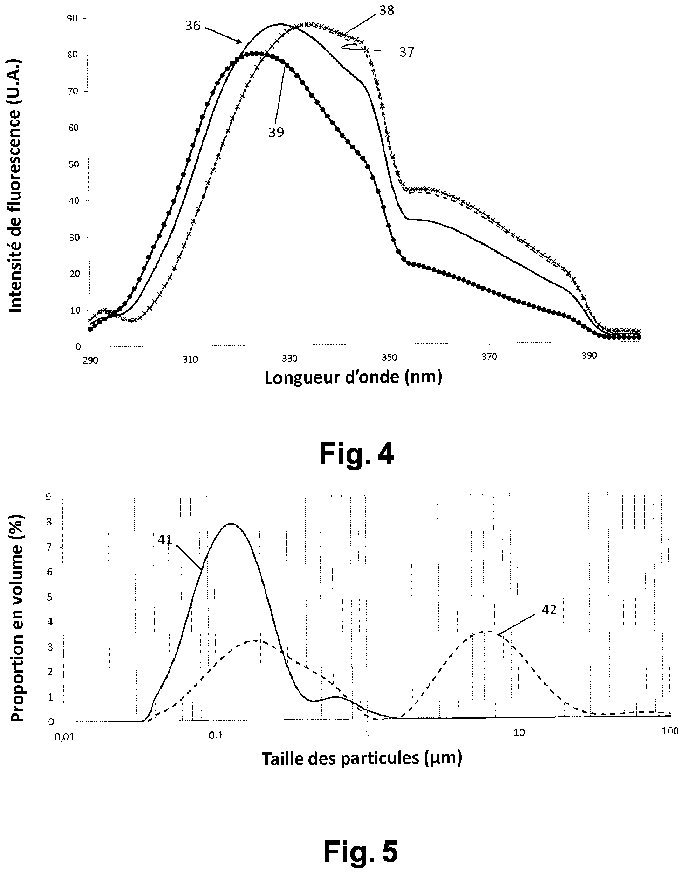

Les figures 3 et 4 présentent, respectivement pour la composition protéique déminéralisée de l'invention et pour la composition déminéralisée de l'art antérieur, les spectres de fluorescence intrinsèque sur une solution pure d'alpha-lactalbumine à laquelle les fluctuations de pH du procédé de l'invention et du procédé de l'art antérieur ont été appliquées. Ces figures reflètent la fluorescence émise lors de l'excitation des acides aminés « tryptophane » présents au sein de l'alpha-lactalbumine.

Dans le procédé de l'invention dans lequel aucun ajustement de pH n'est réalisé, le pH fluctue d'environ 6,7 à 5,3.

En référence à la figure 3, la courbe référencée 33 représente le spectre de fluorescence de la solution d'alpha-lactalbumine à pH de 6,7. Cette courbe présente un lambda maximum de 329 nanomètres, caractéristique de l'état natif de cette protéine. La courbe référencée 34 représente le spectre de fluorescence de la solution d'alpha-lactalbumine à un pH de 5,3. On constate que l'allure du spectre change en s'élargissant et en présentant une intensité maximale de fluorescence diminuée. Cette modification du spectre illustre un changement de structure des édifices protéiques caractéristique d'un phénomène d'agrégation protéique.

La courbe référencée 35 représente le spectre de fluorescence de la solution d'alpha-lactalbumine lorsque le pH de 5,3 est remonté à 6,7 afin de vérifier le caractère réversible des modifications des édifices protéiques. On constate alors que l'allure de la courbe redevient identique et superposable à la courbe initiale 33. En particulier, l'intensité maximale de fluorescence est de nouveau de 329 nanomètres.

Ces résultats illustrent que si l'acidification à un pH minimum de 5,3 conduit à un phénomène d'agrégation protéique, cette agrégation est totalement réversible. Ainsi, la structure des protéines dans la composition déminéralisée de l'invention subissant une faible acidification à un pH de 5,3, est totalement protégée.

Dans le procédé de l'art antérieur dans lequel sont utilisées des résines échangeuses d'ions, le pH fluctue d'environ 6,5 jusqu'à un pH minimum compris entre 2 et 2,5 avant d'être ajusté à 6,5. Le procédé de l'art antérieur implique également la mise en oeuvre d'un traitement thermique supérieur à 90°C comme il sera détaillé plus loin.

En référence à la figure 4, la courbe 36, comme la courbe 33 de la figure 3, représente le spectre de fluorescence de la solution d'alpha-lactalbumine à pH de 6,7 et présente une longueur d'onde d'émission maximale de 329 nanomètres. La courbe 37 illustre le spectre obtenu lorsque la solution d'alpha-lactalbumine est portée à un pH de 2,4, et la courbe 38 illustre le spectre obtenu lorsque la solution d'alpha-lactalbumine à pH de 2,4 subit un traitement thermique de 95°C.

On constate que si les courbes 37 et 38 se superposent, elles présentent un décalage par rapport à la courbe 36 portant la longueur d'onde d'émission maximale à 334 nanomètres. Ce décalage vers des longueurs d'onde d'émission maximale plus grandes illustre le dépliement partiel de la structure unitaire protéique.

La courbe 39 représente le spectre de fluorescence de la solution d'alpha-lactalbumine lorsque le pH de 2,4 avec traitement thermique (courbe 38) est remonté à 6,5.

On constate que la courbe 39 n'est pas superposable avec la courbe initiale 36, l'intensité de fluorescence étant inférieure et la longueur d'onde maximale étant diminuée à environ 324 nanomètres.

Il en résulte que les modifications de structure protéique induite par l'acidification à un pH de 2,4 avec ou sans traitement thermique ne sont pas réversibles pour la composition déminéralisée de l'art antérieur, ce qui traduit une perte de l'état natif de la protéine.

Outre les variations de pH bien moins importantes dans le procédé de l'invention que dans le procédé de l'art antérieur, les variations de températures auxquelles sont soumises les protéines dans le procédé de l'invention sont également moins importantes que dans le procédé de l'art antérieur ce qui garantit la préservation de la structure native des protéines.

Dans le procédé de l'invention, une température de l'ordre de 65°C-68°C est appliquée lors de la thermisation du lait écrémé, puis la température est portée à 10°C-12°C lors de la déminéralisation. De façon optionnelle, une étape de pasteurisation à 72°C pendant quelques secondes peut être appliquée à la composition déminéralisée. Dans le procédé de l'art antérieur, l'utilisation comme matière première d'un lactosérum de fromagerie nécessite une première opération de pasteurisation réalisée à une température supérieure à 72°C puis, après déminéralisation, une seconde étape de pasteurisation à une température supérieure à 90°C est effectuée.

Si l'on considère les températures de thermo-dénaturation irréversibles de trois espèces protéiques majeures présentes dans la phase soluble du lait, à savoir la sérum albumine bovine, l'alpha-lactalbumine et la béta-lactoglobuline, respectivement de 63°C, 69°C et 72°C, on constate que les températures du procédé de l'invention sont inférieures aux températures de dénaturation de l'alpha-lactalbumine et de la béta-lactoglobuline. Il en résulte que l'état de ces protéines n'est pas modifié par le procédé de l'invention. A l'inverse, les températures du procédé de l'art antérieur conduisent à une modification des structures de ces trois espèces protéiques.

On se réfère au Tableau 4 ci-dessous qui présentent des résultats analytiques de dosage protéiques permettant de caractériser les teneurs en protéines dans leur état natif et leur taux d'agrégation.

La composition protéique des compositions protéiques laitières déminéralisées a été déterminée par le biais d'une méthode chimique (dosage de l'azote par technique Kjeldahl) et par le biais de la chromatographie liquide en phase inverse conduite grâce à des analyses dans différentes conditions opératoires.

La composition en protéines solubles a été déterminée par chromatographie en phase liquide suite à l'élimination des protéines dénaturées et caséines résiduelles par précipitation à un pH de 4,6. Cette analyse permet de déterminer les teneurs en protéines présentes dans leur état natif.

L'analyse des protéines totales a également été déterminée après dissociation des agrégats. Cette technique permet notamment de mesurer la dénaturation protéique globale de l'échantillon (taux d'agrégation), mais également celle des protéines individuelles.

Les résultats du Tableau 4 sont présentés également pour les protéines les plus représentatives à savoir la béta-lactoglobuline et la caséine Kappa, les 2 protéines thermosensibles qui co-agrègent sous l'effet des traitements thermiques, ainsi que pour l'alpha-lactalbumine qui est la protéine d'intérêt nutritionnel en nutrition infantile.

**Tableau 4 : Résultats analytiques de dosage protéiques dans la composition de l'invention et dans la composition de l'art antérieur.**

| | Composition déminéralisée de l'invention | Composition déminéralisée de l'art antérieur |
|---|---|---|
| Fraction azotée soluble à pH = 4,6 (par rapport à la fraction azotée totale) | 96% | 69 % |
| % de protéines natives (par rapport au % des protéines totales) | 93 - 97% | < 85% |
| Taux d'agrégation de la béta-lactoglobuline (par rapport à la béta-lactoglobuline totale) | < 8% | 15% |
| Taux d'agrégation de la caséine Kappa (par rapport à la caséine Kappa totale) | ≤ 20% | 55% |
| Taux d'agrégation de l'alpha-lactalbumine (par rapport à de l'alpha-lactalbumine totale) | < 5% | Non déterminé |

Il est confirmé par les résultats présentés dans le Tableau 4 que le pourcentage de protéines natives dans la composition déminéralisée de l'invention est nettement supérieur à celui de la composition de l'art antérieur. On constate par ailleurs que les taux d'agrégation de la béta-lactoglobuline et de la caséine Kappa sont bien plus faibles dans la composition de l'invention. Enfin, le taux d'agrégation de l'alpha-lactalbumine est également faible.

On se réfère à la figure 5 qui illustre la taille des particules présentes dans la composition de l'invention (courbe 41) et dans la composition de l'art antérieur (courbe 42). La taille des particules est mesurée par la technique de granulométrie. Dans la composition de l'invention, on constate une distribution de taille de particules assez homogène, avec une population très majoritaire de particules de petite taille et un très faible pic correspondant à des particules (ou agrégats particulaires) de taille quelque peu supérieure. Le diamètre moyen de type D4,3 est de 0,19micromètres et 50% des particules (en volume) ont une taille inférieure à 0,14micromètres.

Au contraire, la distribution de taille est bimodale pour la composition de l'art antérieur, avec une population de petite taille et une population correspondant à de gros agrégats. Ces données se retrouvent dans les tailles caractéristiques, avec un diamètre moyen de type D4,3 de 5,17micromètres et respectivement 50% et 90% des particules (en volume) ayant une taille supérieure à 0,75micromètres et 11,8micromètres.

Ces résultats s'inscrivent dans la continuité de la préservation de la structure protéique résultant du procédé de l'invention puisqu'il est ainsi constaté que la majeure partie des particules de la composition de l'invention ne sont pas agrégées alors qu'à l'inverse, dans la composition de l'art antérieur, en plus de subir une dénaturation, les protéines sont pour une grande partie d'entre elles sous forme d'agrégats.

Il a ainsi été précédemment démontré que les protéines sériques de la composition déminéralisée de l'invention étaient majoritairement conservées dans leur état natif, non agrégées. Au contraire, les protéines sériques de la composition de l'art antérieur sont dans un état partiellement dénaturé et agrégé, avec un mélange de protéines individuelles et d'agrégats de plus grande taille.

Il en résulte une différence de comportement des protéines sériques de la composition de l'invention et de la composition de l'art antérieur, et plus particulièrement une différence d'interaction avec les micelles de caséine apportées par l'ingrédient lait de la formule infantile.

Cette différence d'état structural des protéines sériques va impacter leur capacité à interagir avec la structure micellaire lors de l'étape de traitement thermique préalable à la déshydratation du lait infantile.

En effet, des protéines sériques natives présentent une capacité plus importante de fixation à la surface de l'édifice micellaire que des protéines sériques dénaturées agrégées. L'homogénéité et l'épaisseur du manteau sérique à la surface micellaire sera ainsi plus important dans le cas de la composition de l'invention ce qui pourrait présenter un impact sur l'accessibilité des micelles de caséines, retarder leur dégradation par les enzymes digestives dans le tractus gastrointestinal et avoir un impact sur le niveau d'allergénicité des caséines en réduisant de facto l'allergénicité de la composition de l'invention.

Le Tableau 5 ci-dessous présente les teneurs en acides aminés essentiels d'intérêt nutritionnel majeur (histidine, tryptophane, tyrosine et leucine), en acides aminés essentiels et semi-essentiels et en acides aminés branchés dans la composition déminéralisée de l'invention et dans la composition déminéralisée de l'art antérieur. La teneur en acides aminés essentiels est un paramètre particulièrement important dans le lait infantile, le nourrisson n'ayant pas les capacités à les synthétiser ; ceux-ci doivent donc être apportés par le biais de l'alimentation, plus particulièrement avant la phase de diversification alimentaire.

**Tableau 5 : Teneurs en acides aminés essentiels d'intérêt nutritionnel majeur, en acides aminés essentiels et semi-essentiels, et en acides aminés branchés dans la composition de l'invention et dans la composition de l'art antérieur**

| | Composition de l'invention | Composition de l'art antérieur | Différence |
|---|---|---|---|
| Histidine | 2,30 ± 0,05 | 1,89 ± 0,05 | + 22% |
| Tryptophane | 2,20 ± 0,14 | 1,85 ± 0,25 | + 19% |
| Tyrosine | 3,23 ± 0,15 | 2,68 ± 0,14 | + 21% |
| Leucine | 12,10 ± 0,23 | 10,84 ± 0,12 | +12% |
| Acides aminés essentiels et semi-essentiels | 56,5 ± 0,5 | 54,4 ± 0,4 | + 4% |
| Acides aminés branchés | 22,4 | 21,8 | +3% |

On constate que la composition de l'invention présente une forte teneur en acides aminés essentiels particulièrement pour ce qui concerne ceux d'intérêt nutritionnel majeur.

Ce résultat est particulièrement important pour le tryptophane. En effet, la règlementation interdit la supplémentation en tryptophane sous toutes ses formes dans les laits infantiles biologiques. Or le tryptophane est présent en forte quantité dans le lait maternel et participe activement au bon développement du nourrisson. Ainsi, la composition de l'invention se rapproche naturellement de la composition du lait maternel, également du point de vue de la teneur en tryptophane.

En outre, le tryptophane est décrit comme précurseur de la sérotonine et de la mélatonine. Le tryptophane interviendrait ainsi de manière positive sur la régulation du sommeil et du stress, de même que sur la concentration.

Enfin, des analyses granulométriques ont été menées sur la matière grasse formant le surnageant, après centrifugation, d'un lait infantile reconstitué, celui-ci étant élaboré à partir de la composition de l'invention ou de la composition de l'art antérieur.

La taille des particules est mesurée par la technique de granulométrie qui permet de mesurer la taille gouttelettes lipidiques individuelles lorsque la mesure est faire en présence de SDS, et la taille des agrégats de gouttelettes lipidiques dans le cas où il y a de la floculation (mesure dans l'eau uniquement). Dans ce dernier cas, les résultats sont exprimés en D4,3 (en micromètres) qui augmente avec le taux d'agrégation des gouttelettes.

Il a été déterminé que le diamètre moyen de type D4,3 pour la composition de l'invention est de 0,75 ± 0,03 micromètres tandis que le diamètre moyen de type D4,3 pour la composition de l'art antérieur est de 4,59 ± 0,05 micromètres. On constate ainsi que le phénomène de floculation est bien moins important dans un lait infantile reconstitué, élaboré à partir de la composition de l'invention, la majorité des globules gras se trouvant dans un état individualisé. A l'inverse, dans un lait reconstitué élaboré à partir de la composition de l'art antérieur on observe une proportion non négligeable d'agrégats de globules gras.

Il a également été déterminé que la taille moyenne des globules gras individuels pour la composition de l'invention est de 0,51 ± 0,02 micromètres, tandis que la taille moyenne des globules gras individuels pour la composition de l'art antérieur est de 0,59 ± 0,02 micromètres.

Il en résulte une stabilité plus importante dans un lait infantile reconstitué à partir de la composition de l'invention. Cette organisation plus favorable de la matière grasse est sans doute liée à la moindre dénaturation protéique pendant le procédé de l'invention et à l'interaction privilégiée des protéines de la composition avec les édifices micellaires, telle que précédemment évoquée.

Il a ainsi été précédemment démontré qu'outre les effets bénéfiques sur la qualité des protéines, le procédé de l'invention et la composition déminéralisée en résultant participent également à une meilleure fonctionnalité du produit fini.

Les qualités précédemment évoqués de la composition de l'invention sont principalement liées au fait que le procédé de l'invention n'engendre ni acidification ni traitement thermique excessifs de nature à altérer les protéines et les autres constituants de la matière première.

Restant dans le cadre de l'invention, la composition déminéralisée précédemment décrite pourrait être obtenue par un autre procédé que celui précédemment décrit, à condition notamment que ce dernier respecte les faibles fluctuations de pH et de température.

## Revendications

1. Procédé de fabrication d'une composition protéique laitière déminéralisée, **caractérisé en ce qu'**il comporte au moins les étapes de :
- préparation (2,3,5,7,9,10,12) ou fourniture d'une composition protéique laitière (1,1a,1b),
- ultrafiltration (15) de la dite composition protéique laitière (1),
- nanofiltration (17) du rétentat d'ultrafiltration (16) obtenu à l'étape précédente, et
- électrodialyse (19) du rétentat de nanofiltration (18) obtenu à l'étape précédente,
ledit procédé étant dépourvu de toute étape de passage sur des résines échangeuses d'ions.

2. Procédé selon la revendication 1, **caractérisé en ce que** le rétentat d'ultrafiltration (16) présente une teneur en matière azotée totale au moins égale à 14% de l'extrait sec.

3. Procédé selon l'une quelconque des revendications 1 et 2, **caractérisé en ce que** la composition protéique laitière (1) est du sérum de fromagerie (13).

4. Procédé selon la revendication 3, **caractérisé en ce que** le sérum de fromagerie (13) est issu de l'agriculture biologique.

5. Procédé selon l'une quelconque des revendications 1 et 2, **caractérisé en ce que** la composition protéique laitière (1) est issu d'un procédé comprenant au moins les étapes de :
- fourniture de lait cru (2),
- écrémage (3), traitement thermique (5) et épuration bactérienne (7) du dit lait cru (2),
- microfiltration sur membrane (10) du lait obtenu à l'étape précédente, et
- récupération du perméat de microfiltration (11) formant la composition protéique laitière (1a).

6. Procédé selon la revendication 5, **caractérisé en ce que** la membrane de microfiltration présente une porosité comprise entre 0,1 et 0,2 micromètres.

7. Procédé selon l'une quelconque des revendications 5 et 6, **caractérisé en ce que** le lait cru (2) est issu de l'agriculture biologique.

8. Composition protéique laitière déminéralisée, **caractérisée en ce qu'**elle est susceptible d'être obtenue par le procédé selon l'une quelconque des revendications 1 à 7.

9. Composition protéique laitière déminéralisée selon la revendication 8, **caractérisée en ce que** le rapport entre les teneurs en calcium et en phosphore est supérieur à 0,65.

10. Composition protéique laitière déminéralisée selon la revendication 9, **caractérisée en ce qu'**elle comporte :
- du calcium à une teneur inférieure à 11 milligrammes par gramme de matière azotée totale,
- du sodium à une teneur inférieure à 5 milligrammes par gramme de matière azotée totale,
- du magnésium à une teneur inférieure à 3 milligrammes par gramme de matière azotée totale,
- du potassium à une teneur inférieure à 5,5 milligrammes par gramme de matière azotée totale,
- des chlorures à une teneur inférieure à 1,7 milligrammes par gramme de matière azotée totale, et
- du phosphore à une teneur inférieure à 8,5 milligrammes par gramme de matière azotée totale.

11. Composition protéique laitière déminéralisée selon l'une quelconque des revendications 9 et 10, **caractérisée en ce qu'**elle comporte :
- du calcium à une teneur inférieure à 7,7 milligrammes par gramme de matière azotée totale,
- du sodium à une teneur inférieure à 3,65 milligrammes par gramme de matière azotée totale,
- du magnésium à une teneur inférieure à 2,15 milligrammes par gramme de matière azotée totale,
- du potassium à une teneur inférieure à 3,70 milligrammes par gramme de matière azotée totale,
- des chlorures à une teneur inférieure à 1,5 milligrammes par gramme de matière azotée totale, et
- du phosphore à une teneur inférieure à 7,7 milligrammes par gramme de matière azotée totale.

12. Composition protéique laitière déminéralisée selon la revendication 8, **caractérisée en ce qu'**elle présente un pourcentage de protéines natives par rapport aux protéines totales qui est supérieur à 85.

13. Composition protéique laitière déminéralisée selon la revendication 12, **caractérisée en ce qu'**elle présente un pourcentage de protéines natives par rapport aux protéines totales qui est est supérieur à 90.

14. Composition protéique laitière déminéralisée selon l'une quelconque des revendications 12 et 13, **caractérisée en ce que** le taux d'agrégation de la protéine A-lactalbumine dans ladite composition est inférieur à 5%.

15. Composition protéique laitière déminéralisée selon la revendication 8, **caractérisée en ce que** le diamètre moyen de type D4,3 des particules de ladite composition est inférieur à 0,3 micromètres.

16. Composition protéique laitière déminéralisée selon la revendication 15, **caractérisée en ce que** le diamètre moyen de type D4,3 des particules de ladite composition est inférieur à 0,2 micromètres et **en ce qu'**au moins 40% des particules en volume ont une taille inférieure à 0,15 micromètres.

17. Utilisation d'une composition protéique laitière déminéralisée selon l'une quelconque des revendications 8 à 16, dans laquelle ladite composition protéique laitière déminéralisée est utilisée comme ingrédient pour l'élaboration d'un lait infantile.

18. Utilisation selon la revendication 17, **caractérisée en ce que** le lait infantile est issu de l'agriculture biologique.

## Patentansprüche

1. Verfahren zur Herstellung einer demineralisierten Milchproteinzusammensetzung, **dadurch gekennzeichnet, dass** es mindestens die folgenden Schritte umfasst:
- Zubereiten (2,3,5,7,9,10,12) oder Bereitstellen einer Milchproteinzusammensetzung (1,1a,1b),
- Ultrafiltration (15) der Milchproteinzusammensetzung (1),
- Nanofiltration (17) des im vorhergehenden Schritt erhaltenen Ultrafiltrationsretentats (16) und
- Elektrodialyse (19) des im vorhergehenden Schritt erhaltenen Nanofiltrationsretentats (18),
wobei das Verfahren keinen Schritt der Passage über Ionenaustauscherharze aufweist.

2. Verfahren nach Anspruch 1, **dadurch gekennzeichnet, dass** das Ultrafiltrationsretentat (16) einen Gesamtstickstoffgehalt von mindestens 14% des Trockenextrakts aufweist.

3. Verfahren nach einem der Ansprüche 1 und 2, **dadurch gekennzeichnet, dass** es sich bei der Milchproteinzusammensetzung (1) um Käseserum (13) handelt.

4. Verfahren nach Anspruch 3, **dadurch gekennzeichnet, dass** das Käseserum (13) aus kontrolliert biologischer Landwirtschaft stammt.

5. Verfahren nach einem der Ansprüche 1 und 2, **dadurch gekennzeichnet, dass** die Milchproteinzusammensetzung (1) aus einem Verfahren stammt, das mindestens die folgenden Schritte umfasst:
- Bereitstellen von Rohmilch (2),
- Entrahmung (3), Wärmebehandlung (5) und bakterielle Reinigung (7) der Rohmilch (2),
- Membranmikrofiltration (10) der im vorhergehenden Schritt erhaltenen Milch und
- Rückgewinnen des Mikrofiltrationspermeats (11), das die Milchproteinzusammensetzung (1a) bildet.

6. Verfahren nach Anspruch 5, **dadurch gekennzeichnet, dass** die Mikrofiltrationsmembran eine Porosität zwischen 0,1 und 0,2 Mikrometern aufweist.

7. Verfahren nach einem der Ansprüche 5 und 6, **dadurch gekennzeichnet, dass** die Rohmilch (2) aus kontrolliert biologischer Landwirtschaft stammt.

8. Demineralisierte Milchproteinzusammensetzung, **dadurch gekennzeichnet, dass** sie durch das Verfahren nach einem der Ansprüche 1 bis 7 erhältlich ist.

9. Demineralisierte Milchproteinzusammensetzung nach Anspruch 8, **dadurch gekennzeichnet, dass** das Verhältnis zwischen dem Calcium- und Phosphorgehalt größer als 0,65 ist.

10. Demineralisierte Milchproteinzusammensetzung nach Anspruch 9, **dadurch gekennzeichnet, dass** sie umfasst:
- Calcium mit einem Gehalt von weniger als 11 Milligramm pro Gramm Gesamtstickstoff,
- Natrium mit einem Gehalt von weniger als 5 Milligramm pro Gramm Gesamtstickstoff,
- Magnesium mit einem Gehalt von weniger als 3 Milligramm pro Gramm Gesamtstickstoff,
- Kalium mit einem Gehalt von weniger als 5,5 Milligramm pro Gramm Gesamtstickstoff,
- Chloride mit einem Gehalt von weniger als 1,7 Milligramm pro Gramm Gesamtstickstoff und
- Phosphor mit einem Gehalt von weniger als 8,5 Milligramm pro Gramm Gesamtstickstoff.

11. Demineralisierte Milchproteinzusammensetzung nach einem der Ansprüche 9 und 10, **dadurch gekennzeichnet, dass** sie umfasst:
- Calcium mit einem Gehalt von weniger als 7,7 Milligramm pro Gramm Gesamtstickstoff,
- Natrium mit einem Gehalt von weniger als 3,65 Milligramm pro Gramm Gesamtstickstoff,
- Magnesium mit einem Gehalt von weniger als 2,15 Milligramm pro Gramm Gesamtstickstoff,
- Kalium mit einem Gehalt von weniger als 3,70 Milligramm pro Gramm Gesamtstickstoff,
- Chloride mit einem Gehalt von weniger als 1,5 Milligramm pro Gramm Gesamtstickstoff und
- Phosphor mit einem Gehalt von weniger als 7,7 Milligramm pro Gramm Gesamtstickstoff.

12. Demineralisierte Milchproteinzusammensetzung nach Anspruch 8, **dadurch gekennzeichnet, dass** sie einen Prozentsatz an nativen Proteinen relativ zu den Gesamtproteinen aufweist, der größer als 85 ist.

13. Demineralisierte Milchproteinzusammensetzung nach Anspruch 12, **dadurch gekennzeichnet, dass** sie einen Prozentsatz an nativen Proteinen relativ zu den Gesamtproteinen aufweist, der größer als 90 ist.

14. Demineralisierte Milchproteinzusammensetzung nach einem der Ansprüche 12 und 13, **dadurch gekennzeichnet, dass** der Aggregationsgrad des A-Lactalbumin-Proteins in der Zusammensetzung weniger als 5% beträgt.

15. Demineralisierte Milchproteinzusammensetzung nach Anspruch 8, **dadurch gekennzeichnet, dass** der mittlere Durchmesser des D4,3-Typs der Partikel der Zusammensetzung weniger als 0,3 Mikrometer beträgt.

16. Demineralisierte Milchproteinzusammensetzung nach Anspruch 15, **dadurch gekennzeichnet, dass** der mittlere Durchmesser des D4,3-Typs der Partikel der Zusammensetzung weniger als 0,2 Mikrometer beträgt, und dass mindestens 40 Vol.-% der Partikel ein Größe von weniger als 0,15 Mikrometer aufweisen.

17. Verwendung einer demineralisierten Milchproteinzusammensetzung nach einem der Ansprüche 8 bis 16, wobei die demineralisierte Milchproteinzusammensetzung als Bestandteil für die Herstellung einer Säuglingsmilch verwendet wird.

18. Verwendung nach Anspruch 17, **dadurch gekennzeichnet, dass** die Säuglingsmilch aus kontrolliert biologischer Landwirtschaft gewonnen wird.

## Claims

1. Method for producing a demineralized milk protein composition, **characterized in that** it comprises at least the steps of:
- preparation (2, 3, 5, 7, 9, 10, 12) or provision of a milk protein composition (1, 1a, 1b),
- ultrafiltration (15) of said milk protein composition (1),
- nanofiltration (17) of the ultrafiltration retentate (16) obtained in the preceding step, and
- electrodialysis (19) of the nanofiltration retentate (18) obtained in the preceding step,
said method being devoid of any step of passing over ion exchange resins.

2. Method according to Claim 1, **characterized in that** the ultrafiltration retentate (16) has a total nitrogenous matter content at least equal to 14% of the solids content.

3. Process according to either one of Claims 1 and 2, **characterized in that** the milk protein composition (1) is cheesemaking whey (13).

4. Method according to Claim 3, **characterized in that** the cheesemaking whey (13) is derived from biological agriculture.

5. Method according to either one of Claims 1 and 2, **characterized in that** the milk protein composition (1) is derived from a method comprising at least the steps of:
- provision of raw milk (2),
- skimming (3), heat treatment (5) and bacterial purification (7) of said raw milk (2),
- membrane microfiltration (10) of the milk obtained in the preceding step, and
- recovery of the microfiltration permeate (11) forming the milk protein composition (1a).

6. Method according to Claim 5, **characterized in that** the microfiltration membrane has a porosity of between 0.1 and 0.2 micrometres.

7. Method according to either one of Claims 5 and 6, **characterized in that** the raw milk (2) is derived from biological agriculture.

8. Demineralized milk protein composition, **characterized in that** it can be obtained by means of the method according to any one of Claims 1 to 7.

9. Demineralized milk protein composition according to Claim 8, **characterized in that** the ratio of the calcium content to the phosphorus content is greater than 0.65.

10. Demineralized milk protein composition according to Claim 9, **characterized in that** it comprises:
- calcium in a content of less than 11 milligrams per gram of total nitrogenous matter,
- sodium in a content of less than 5 milligrams per gram of total nitrogenous matter,
- magnesium in a content of less than 3 milligrams per gram of total nitrogenous matter,
- potassium in a content of less than 5.5 milligrams per gram of total nitrogenous matter,
- chlorides in a content of less than 1.7 milligrams per gram of total nitrogenous matter, and
- phosphorus in a content of less than 8.5 milligrams per gram of total nitrogenous matter.

11. Demineralized milk protein composition according to either one of Claims 9 and 10, **characterized in that** it comprises:
- calcium in a content of less than 7.7 milligrams per gram of total nitrogenous matter,
- sodium in a content of less than 3.65 milligrams per gram of total nitrogenous matter,
- magnesium in a content of less than 2.15 milligrams per gram of total nitrogenous matter,
- potassium in a content of less than 3.70 milligrams per gram of total nitrogenous matter,
- chlorides in a content of less than 1.5 milligrams per gram of total nitrogenous matter, and
- phosphorus in a content of less than 7.7 milligrams per gram of total nitrogenous matter.

12. Demineralized milk protein composition according to Claim 8, **characterized in that** it has a percentage of native proteins relative to total proteins that is greater than 85.

13. Demineralized milk protein composition according to Claim 12, **characterized in that** it has a percentage of native proteins relative to total proteins that is greater than 90.

14. Demineralized milk protein composition according to either one of Claims 12 and 13, **characterized in that** the degree of aggregation of the protein A-lactalbumin in said composition is less than 5%.

15. Demineralized milk protein composition according to Claim 8, **characterized in that** the mean diameter of type D4,3 of the particles of said composition is less than 0.3 micrometres.

16. Demineralized milk protein composition according to Claim 15, **characterized in that** the mean diameter of type D4,3 of the particles of said composition is less than 0.2 micrometres and **in that** at least 40% of the particles by volume have a size of less than 0.15 micrometres.

17. Use of a demineralized milk protein composition according to any one of Claims 8 to 16, in which said demineralized milk protein composition is used as an ingredient for the production of an infant milk.

18. Use according to Claim 17, **characterized in that** the infant milk is derived from biological agriculture.
